# EUROPÄISCHE PATENTSCHRIFT

(11) **EP 3 185 213 B1**
(45) Veröffentlichungstag und Bekanntmachung des Hinweises auf die Patenterteilung: **14.04.2021**
(21) Anmeldenummer: 16200831.2
(22) Anmeldetag: 28.11.2016
(51) Int. Cl.: G06T 7/571

(54) **VERFAHREN ZUR ERSTELLUNG EINER TIEFENKARTE MITTELS EINER KAMERA**
METHOD FOR CREATING A DEPTH MAP BY MEANS OF A CAMERA
PROCÉDÉ DE RÉALISATION D'UNE CARTE BATHYMÉTRIQUE À L'AIDE D'UNE CAMÉRA

(30) Priorität: 23.12.2015 DE 102015226667; 20.01.2016 DE 102016200660
(43) Veröffentlichungstag der Anmeldung: 28.06.2017
(73) Patentinhaber: Robert Bosch GmbH, 70442 Stuttgart (DE)
(72) Erfinder: Goettlinger, Merlin, 90482 Nürnberg (DE); Warzelhan, Jan Karl, Pittsburgh, 15222 (US)

(56) Entgegenhaltungen:
- US-A1- 2010 328 460
- US-A1- 2014 363 043
- KRISHNAN A ET AL: "RANGE ESTIMATION FROM FOCUS USING A NON-FRONTAL IMAGING CAMERA", INTERNATIONAL JOURNAL OF COMPUTER VISION, KLUWER ACADEMIC PUBLISHERS, NORWELL, US, Bd. 20, Nr. 3, 1. Dezember 1996 (1996-12-01), Seiten 169-185, XP000637649, ISSN: 0920-5691, DOI: 10.1007/BF00208718
- TIAGO GASPAR ET AL: "New Depth From Focus Filters in Active Monocular Vision Systems for Indoor 3-D Tracking", IEEE TRANSACTIONS ON CONTROL SYSTEMS TECHNOLOGY., Bd. 23, Nr. 5, 1. September 2015 (2015-09-01), Seiten 1827-1839, XP055348922, US ISSN: 1063-6536, DOI: 10.1109/TCST.2015.2388956
- Hiroshi Ikeoka ET AL: "Depth Estimation Using Smart Image Sensor with Multiple-Focus Image Function", Journal of the Institute of Image Information and Television Engineers, 1. März 2008 (2008-03-01), Seiten 384-391, XP055348948, Gefunden im Internet: URL:https://www.jstage.jst.go.jp/article/i tej/62/3/62_3_384/_pdf [gefunden am 2017-02-23]
- DINGRUI WAN ET AL: "Multiresolution and Wide-Scope Depth Estimation Using a Dual-PTZ-Camera System", IEEE TRANSACTIONS ON IMAGE PROCESSING, IEEE SERVICE CENTER, PISCATAWAY, NJ, US, Bd. 17, Nr. 3, 1. März 2009 (2009-03-01), Seiten 677-682, XP011251210, ISSN: 1057-7149

## Beschreibung

Die vorliegende Erfindung betrifft ein Verfahren zur Erstellung und Verwendung einer Tiefenkarte wenigstens eines ausgewählten Bereichs eines Erfassungsbereichs einer ortsfesten Kamera sowie eine ortsfeste PTZ-Kamera, ein Computerprogramm zu dessen Durchführung und ein maschinenlesbares Speichermedium.

### Stand der Technik

Überwachungskameras werden zum Erkennen verdächtiger Gegenstände oder Personen, Zählen von Personen oder eine automatische Überwachung eines bestimmten Bereichs im Erfassungsbereich der Kamera verwendet. Insbesondere werden hierbei sterile Zonen wie bspw. Zäune, Außenflächen von Gebäuden und dergleichen überwacht. Der Einsatzbereich solcher Überwachungskameras weitet sich zunehmend jedoch auch auf öffentlich zugängliche Bereiche, wie bspw. Supermärkte, Bahnhöfe, Flughäfen und dergleichen aus.

Um eine robuste Verfolgung von Objekten (auch als Tracking bezeichnet) in solchen Szenen zu gewährleisten, können die Überwachungskameras kalibriert werden. Hierbei kommt typischerweise eine Kalibrierung in Betracht, die eine Beziehung von 2D-Bildpunkten zu 3D-Weltpunkten berechnet, deren Position sich auf der dazugehörigen Grundebene befindet. Mit diesen Informationen können reale Geschwindigkeiten und Objektgrößen abgeschätzt werden, um bspw. eine stabilere Objektverfolgung im Kamerabild berechnen zu können.

Weitergehende Tiefeninformation, wie bspw. von in der Szene befindlichen Gegenständen (z.B. Hindernisse, Rampen, Treppen, Schränke, abgestellte Gegenstände und dergleichen), kann in der Regel nicht ohne Weiteres mit einem sog.

Ein-Kamera-System, d.h. einer fest installierten, monokularen Kamera, wie sie typisch für den Bereich der Videoüberwachung ist, extrahiert werden. Diese Informationen sind aber zusätzlich nützlich, um eine weitere Verbesserung und somit robustere Systeme mit Videoinhaltsanalyse (auch mit VCA als Abkürzung für Video Content Analysis bezeichnet) entwickeln zu können.

Neben statischen Kameras können in der Videoüberwachung auch sog. PTZ-Kameras mit PTZ als Abkürzung für Pan, Tilt und Zoom, d.h. Schwenken, Kippen und Zoomen, eingesetzt werden. Solche Kameras sind zwar stationär an einem Ort angebracht, deren Kamerasystem (optisches System mit Bildsensor) ist aber beweglich. Dies ermöglicht eine Beobachtung verschiedener Bereiche einer Überwachungsszene und somit eine flexiblere Videoüberwachungsmöglichkeit der zu überwachenden Szene.

Aus der DE 10 2013 223 995 A1 ist bspw. eine Überwachungskamera bekannt, mit der eine Tiefenkarte, d.h. eine Karte mit Tiefeninformationen (d.h. Abstand eines Bildpunktes von einem Referenzpunkt, insbesondere von der Kamera), eines Erfassungsbereichs der Kamera ermittelt werden kann. Hierbei wird die Kamera im Raum bewegt, um den Erfassungsbereich aus verschiedenen Blickwinkeln erfassen zu können, woraus dann die Tiefenkarte ermittelt wird.

Aus "RANGE ESTIMATION FROM FOCUS USING A NON-FRONTAL IMAGING CAMERA" , International Journal of Computer Vision, Bd. 20, Nr. 3, Seiten 169-185, ISSN: 0920-5691, ist ein Verfahren zum Erfassen von Tiefeninformationen mittels einer Kamera bekannt. Die Tiefeninformationen werden vom Fokus einer Kamera erhalten. Hierbei werden mehrere separate Bildbereiche erfasst bzw. angesteuert.

Aus der "New Depth From Focus Filters in Active Monocular Vision Systems for Indoor 3-D Tracking" IEEE Transactions on Control Systems Technology, Bd. 23, Nr. 5, Seiten 1827-1839, ISSN: 1063-6536, ist ein Verfahren zur Objektverfolgung unter Verwendung einer PTZ-Kamera bekannt, wobei auch eine Ermittlung von Tiefeninformationen basierend auf dem Fokus der Kamera verwendet wird.

In "Multiresolution and Wide-Scope Depth Estimation Using a Dual-PTZ-Camera System" , IEEE Transactions on Image Processing, Bd. 17, Nr. 3, Seiten 677-682, ISSN: 1057-7149, wird die Erstellung von Tiefenkarten im Bereich der Videoüberwachung bei Verwendung zweier PTZ-Kameras beschrieben.

In "Depth Estimation Using Smart Image Sensor with Multiple-Focus Image Function", Journal of the Institute of Image Information and Television Engineers, Seiten 384-391, wird ebenfalls die Ermittlung von Tiefeninformationen vom Fokus erwähnt. Aus der US 2014/0363043 A2 ist eine Überwachung eines Bereichs mittels eines Kamerasystems bekannt. Die US 2010/328460 A1 beschreibt eine sog. PTZ-Kamera.

### Offenbarung der Erfindung

Erfindungsgemäß werden ein Verfahren zur Erstellung und Verwendung einer Tiefenkarte für eine ortsfeste Kamera sowie eine ortsfeste PTZ-Kamera, ein Computerprogramm zu dessen Durchführung und ein maschinenlesbares Speichermedium mit den Merkmalen der unabhängigen Patentansprüche vorgeschlagen. Vorteilhafte Ausgestaltungen sind Gegenstand der Unteransprüche sowie der nachfolgenden Beschreibung.

Ein erfindungsgemäßes Verfahren dient zur Erstellung einer Tiefenkarte wenigstens eines ausgewählten Bereichs eines Erfassungsbereichs einer Kamera. Bei dem Erfassungsbereich kann es sich hierbei um den maximal von der Kamera, ggf. auch durch Schwenken der Kamera oder Ähnlichem, erfassbaren bzw. einsehbaren Bereich bzw. die zu überwachende Szene handeln. Bei dem wenigstens einen ausgewählten Bereich kann es sich zwar auch um den vollständigen Erfassungsbereich handeln, jedoch ist es oft zweckmäßig, nur gewisse Bereiche aus dem gesamten Erfassungsbereich auszuwählen, für die eine Überwachung gewünscht ist. So kann es bspw. zweckmäßig sein, nur einen solchen Bereich auszuwählen, indem sich tatsächlich Personen bewegen können. Bei dem vorgeschlagenen Verfahren werden nun mittels der Kamera mehrere, voneinander verschiedene Teilbereiche des wenigstens einen ausgewählten Bereichs angesteuert. Unter dem Ansteuern eines Teilbereichs soll hierbei ein Einschränken des aktuellen, im Blick der Kamera befindlichen Bereichs der Kamera auf einen bestimmten zu erfassenden Teilbereich verstanden werden. Die Ansteuerung bestimmter Teilbereiche kann bspw. unter Verwendung von Öffnungswinkel und aktuellem Blickwinkel der Kamera, die für eine verwendete Kamera in der Regel im Rahmen deren Steuerung bekannt sind, erfolgen. Die Teilbereiche werden im Rahmen der Bildverarbeitung oftmals auch als sog. Kacheln bezeichnet. Für jeden der Teilbereiche wird nun mittels Variation einer Fokuseinstellung der Kamera eine Tiefeninformation aus dem jeweiligen Teilbereich ermittelt, wobei dann unter Berücksichtigung der Tiefeninformationen der Teilbereiche die Tiefenkarte erstellt wird.

Mit dem vorgeschlagenen Verfahren ist es nun möglich, eine sehr genaue Tiefenkarte, d.h. eine Karte mit Tiefeninformationen des Erfassungsbereichs der Kamera oder zumindest wenigstens eines ausgewählten Bereichs davon, zu erstellen. Das vorgeschlagene Verfahren macht sich dabei zunutze, dass eine Ermittlung einer Tiefeninformation mittels Variation der Fokuseinstellungen der Kamera für kleine Ausschnitte eines Erfassungsbereichs deutlich besser funktioniert als für den gesamten Erfassungsbereich, da in einem kleinen Ausschnitt im Vergleich zu dem gesamten Erfassungsbereich in aller Regel nicht Objekte mit verschiedenen Entfernungen zu sehen sind. Bei den Objektiven solcher Kameras, wie sie für Überwachungszwecke verwendet werden, werden in der Regel sehr viele Bereiche des Erfassungsbereichs bzw. der Szene scharf gestellt, da in der Videoüberwachung ein möglichst großer Bereich einer Szene erkannt werden soll. Während hier dann keine Tiefeninformationen durch Variation der Fokuseinstellungen aus dem Erfassungsbereich gewonnen werden können, ist dies mit dem vorgeschlagenen Verfahren möglich.

Mit dem vorgeschlagenen Verfahren ist es weiterhin möglich, 3D-Informationen einer zu überwachenden Szene verstärkt in neuen Anwendungen der automatischen Videoüberwachung zu nutzen, bspw. um robustere VCA-Systeme entwickeln zu können. Die Extraktion bzw. Bereitstellung dieser Tiefeninformationen über andere Verfahren wäre sehr aufwändig und kostspielig, insbesondere dann, wenn bspw. mittels einer Kamera die Szene abgelaufen werden müsste, um auf diese Weise 3D-Informationen zu extrahieren (sog. "Structure from Motion"), oder eine Verwendung von 3D-Sensoren (z. B. Kinect, Time-Of-Flight-Kameras, Stereokameras).

Das vorgeschlagene Verfahren kann bspw. im Hintergrund während eines normalen Betriebs der Kamera laufen, oder auch wenn die Kamera bspw. gerade nicht anderweitig verwendet wird.

Das vorgeschlagene Verfahren kann auch nur punktuell in der Szene eingesetzt werden, um mögliche Störgrößen für die Objektverfolgung zu validieren. Tracks, d.h. Objektverfolgungen, können oftmals an, bestimmten Stellen der Szene immer wieder abbrechen oder verschwinden. Mit dem vorgeschlagenen Verfahren können diese Bereiche gezielt vermessen werden, um bspw. Verdeckungskanten, d.h. Kanten von Objekten, hinter welchen eine Person verdeckt sein kann, zu bestätigen.

Mittels der Extraktion solcher Tiefeninformationen können zusätzliche Funktionen im Bereich der Sicherheitstechnik bereitgestellt werden, bspw. kann die Frage beantwortet werden, ob sich Gegenstände vor Notausgängen oder auf Wegen zu Notausgängen befinden. Außerdem kann die Frage beantwortet werden, ob eine freie Sicht der Kamera auf die Szene durch nahe Hindernisse blockiert ist.

Das vorgeschlagene Verfahren ist zudem auf bereits installierten Kameras anwendbar. Es kann bspw. als zusätzlicher Service angeboten werden und somit einen Mehrwert für bestehende Kamera-Installationen bieten.

Erfindungsgemäß werden die anzusteuernden Teilbereiche unter Berücksichtigung von Bildgradienten in einem dem wenigstens einen ausgewählten Bereich entsprechenden Bild ausgewählt. Unter solchen Bildgradienten können bspw. Gradienten von Helligkeitswerten benachbarter Pixel verstanden werden. Da solche Gradienten gerade für Kanten von Objekten, welcher wiederum auch Tiefensprünge darstellen, besonders groß sind, lässt sich durch Berücksichtigung von Bildgradienten besonders gut nach Objekten unterscheiden, so dass die Teilbereiche gezielt ausgewählt werden können, um Tiefensprünge zu detektieren.

Vorteilhafterweise werden die anzusteuernden Teilbereiche unter Berücksichtigung einer Objektverfolgung in dem wenigstens einen ausgewählten Bereich ausgewählt. Hierzu kann bspw. auf eine Videoinhaltsanalyse des Erfassungsbereichs bzw. des wenigstens einen ausgewählten Bereichs zurückgegriffen werden, bei welcher Objekte wie bspw. Personen verfolgt werden. Die anzusteuernden Teilbereiche können auf diese Weise auf solche Bereiche eingeschränkt werden, in denen tatsächlich Personen auftauchen können und daher eine besonders gute Tiefeninformation zur besseren Objektverfolgung nötig ist. Andere, für die Überwachung nicht relevante Bereiche können damit sehr einfach ausgeschlossen werden, wodurch die Erstellung der Tiefenkarte schneller erfolgen kann.

Es ist von Vorteil, wenn die anzusteuernden Teilbereiche derart ausgewählt werden, dass benachbarte Teilbereiche wenigstens teilweise überlappen, oder exakt bzw. möglichst exakt aneinandergrenzen. Auf diese Weise ist später ein Zusammenfügen der einzelnen, aus den jeweiligen Teilbereichen gewonnen Tiefenbilder einfacher möglich.

Vorzugsweise werden bei der Erstellung der Tiefenkarte einzelne, den Teilbereichen entsprechende Tiefenbilder zusammengesetzt, wobei Tiefeninformationen für Bereiche des wenigstens einen ausgewählten Bereichs, für die mittels der Kamera keine Tiefeninformation ermittelt wurden, wenigstens teilweise unter Berücksichtigung der Tiefeninformationen der Teilbereiche abgeschätzt werden. Zum einen müssen auf diese Weise nicht für alle im relevanten Überwachungsbereich liegenden Teilbereiche Tiefeninformationen ermittelt werden, zum anderen ist dies oftmals auch nur schwierig möglich. Insbesondere bei homogenen Flächen, wie bspw. Oberflächen von Gegenständen, können Tiefeninformationen durch Variation der Fokuseinstellungen kaum gewonnen werden. Diese fehlenden Bereiche können dann bspw. durch Interpolation zwischen Tiefen, die Kanten eines Objekts entsprechen, sehr einfach abgeschätzt werden.

Vorteilhafterweise wird mittels Variation der Fokuseinstellung der Kamera die Tiefeninformation aus dem jeweiligen Teilbereich ermittelt, indem Bilder für verschiedene Fokusstufen aufgenommen werden, und aus Bildgradienten der einzelnen Bilder eine dem maximalen Bildgradienten entsprechende Fokuseinstellung ermittelt wird. Unter solchen Bildgradienten können bspw. Gradienten von Helligkeitswerten benachbarter Pixel verstanden werden. Hierzu kann bspw. für verschiedene, vorbestimmte Fokuseinstellungen jeweils ein Bild des jeweiligen Teilbereichs aufgenommen werden, wodurch man eine Serie von Bildern, einen sog. Bildstapel, erhält. Da bei demjenigen Bild mit der besten Fokuseinstellung, d.h. bei demjenigen Bild, das am schärfsten abgebildet wird, der Bildgradient am größten ist, kann durch Ermittlung des maximalen Bildgradienten die der Entfernung des Objekts entsprechende Fokuseinstellung, die das Objekt scharf abbildet, gefunden werden. Aus der so ermittelten Fokuseinstellung kann dann bspw. anhand von Vergleichswerten oder einer Funktion, wodurch einer Fokuseinstellung eine Entfernung zugeordnet wird, die Entfernung des Objekts, d.h. die Tiefeninformation, ermittelt werden. Diese - an sich bekannte - Vorgehensweise wird auch als "Depth from Focus" bezeichnet. Solche Vergleichswerte oder an solche Vergleichswerte gefittete Funktionen können bspw. durch Testaufnahmen ermittelt werden.

Die Genauigkeit der mittels Variation der Fokuseinstellung der Kamera ermittelten Tiefeninformation kann bspw. erhöht werden, indem ein geeignetes Modell des Fokus verwendet wird, wie es bspw. aus "Asada, N., Fujiwara, H., & Matsuyama, T. (1998). Edge and depth from focus. International Journal of Computer Vision, 26 (2), 153-163." bekannt ist.

Es ist von Vorteil, wenn die mehreren, voneinander verschiedenen Teilbereiche mittels der Kamera durch Schwenken und/oder Kippen und/oder Zoomen der Kamera angesteuert werden. Erfindungsgemäß wird hierzu als Kamera eine ortsfeste PTZ-Kamera verwendet. Schwenken, Kippen und Zoomen sind Möglichkeiten, bei einer ortfesten Kamera, verschiedene Bereiche aus dem Erfassungsbereich auszuwählen. Während durch Schwenken in horizontaler Richtung verschiedene Bereiche ausgewählt werden können, können durch Kippen in vertikaler Richtung verschiedene Bereiche ausgewählt werden. Dabei ist darauf zu achten, dass sich bei Verändern des Kippwinkels der erfassbare Bereich in horizontaler Ausdehnung ändert. Insofern kann es nötig sein, bei unterschiedlichen Kippwinkeln eine unterschiedliche Anzahl an Teilbereichen anzusteuern, um die gleiche Auflösung zu erreichen. Weiterhin kann auch durch Zoomen ein anderer Bildausschnitt gewählt werden. Zweckmäßig kann es dabei sein, insbesondere bei weit entfernten Bereichen des Erfassungsbereichs, eine hohe Zoomstufe zu verwenden.

Erfindungsgemäß wird die Tiefenkarte zur Verbesserung und/oder Überprüfung einer Videoinhaltsanalyse für den wenigstens einen ausgewählten Bereich verwendet. Die Tiefenkarte bzw. die gewonnenen Tiefeninformationen können dabei einem System zur Videoinhaltsanalyse (VCA-System) zur Verfügung gestellt werden. Damit ist nun bspw. eine verbesserte bzw. robustere Objektverfolgung, eine Validierung von Fehldetektionen von Objektdetektoren, oder bspw. eine Generierung einer 3D-Umgebung der Überwachungsszene für Visualisierungszwecke möglich. Ebenso ist es denkbar, aus den berechneten Tiefen eine Kalibrierung der Szene, bspw. unter Berücksichtigung von Grundebenen und einer Höhe der Kamera über diesen Grundebenen, vorzunehmen. Mittels der Tiefenkarte können extrinsische Parameter der Kamera, also bspw. Höhe, auf der sich die Kamera befindet, und Blickwinkel auf die Grundebene, geschätzt werden.

Eine erfindungsgemäße Kamera ortsfeste PTZ- Kamera, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnungen

- Figur 1: zeigt schematisch eine Kamera, wie sie für ein erfindungsgemäßes Verfahren in einer bevorzugten Ausführungsform verwendet werden kann, mit einem zugehörigen Erfassungsbereich.
- Figur 2a: zeigt schematisch einen Teilbereich des Erfassungsbereichs aus Figur 1.
- Figur 2b: zeigt schematisch ein Gradienten-Stapel-Bild für verschiedene Fokuseinstellungen einer Kamera für den Teilbereich aus Figur 2a.
- Figur 3: zeigt einen Zusammenhang zwischen Fokuseinstellungen einer Kamera und Entfernungen eines Objekts von der Kamera.
- Figur 4: zeigt schematisch eine Tiefenkarte für den Erfassungsbereich aus Figur 1.

### Ausführungsform(en) der Erfindung

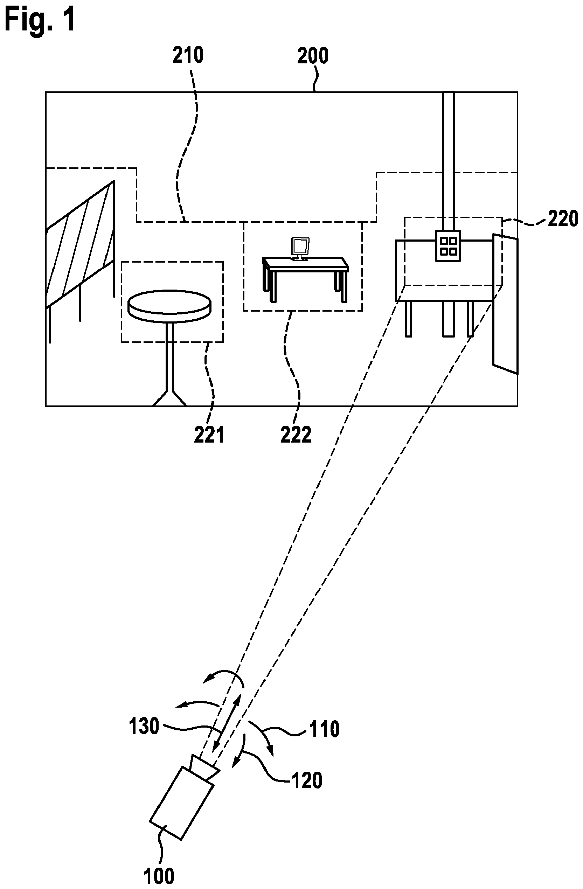

In Figur 1 ist schematisch eine Kamera 100, wie sie für ein erfindungsgemäßes Verfahren in einer bevorzugten Ausführungsform verwendet werden kann, gezeigt. Bei der Kamera 100 handelt es sich vorliegend um eine sog. PTZ-Kamera, d.h. eine Kamera, die zwar ortsfest installiert ist, jedoch geschwenkt und gekippt werden kann und eine Zoom-Funktion aufweist.

Die zugehörigen Bewegungen sind in der Figur mittels der Bezugszeichen 110 für Schwenken in horizontaler Richtung (d.h. Rotation um eine vertikale Achse), 120 für Kippen in vertikaler Richtung (d.h. Rotation um eine horizontale Achse) sowie 130 für die Zoom-Funktion bezeichnet. Während beim Schwenken und beim Kippen die Kamera 110 rotiert wird, wird bei der Zoom-Funktion die Kamera selbst nicht bewegt, sondern es wird nur die Einstellung ihres Objektivs verändert. Mit allen drei beschriebenen Möglichkeiten kann jedoch der aktuell von der Kamera erfasste Bereich geändert werden.

Weiterhin ist ein Erfassungsbereich 200, hier beispielhaft in einem Büroraum, gezeigt. Der Erfassungsbereich 200 bezeichnet dabei den maximal von der Kamera, d.h. durch maximales Schwenken, Kippen und Zoomen, erfassbaren Bereich einer Umgebung. In dem Erfassungsbereich 200 kann somit eine Überwachung erfolgen.

In dem Erfassungsbereich 200 ist ein Bereich 210 ausgewählt, der verschiedene, in dem Erfassungsbereich 200 befindliche Gegenstände umfasst. Insbesondere umfasst der ausgewählte Bereich 210 damit Bereiche, in denen sich bspw. Personen aufhalten oder bewegen können. Bereiche, in denen sich Personen nicht aufhalten können, bspw. ein Deckenbereich, befinden sich vorliegend nicht in dem ausgewählten Bereich 210.

Vorliegend sind in dem ausgewählten Bereich 210 beispielhaft drei Teilbereiche 220, 221 und 222, gezeigt, die mittels der Kamera 100 durch geeignetes Schwenken und/oder Kippen und/oder Zoomen angesteuert werden können. In dem Teilbereich 220 befindet sich beispielhaft ein Stehtisch, in dem Teilbereich 221 ein Schreibtisch und in dem Teilbereich 222 eine Schautafel.

Die Teilbereiche werden entlang von Bildgradienten extrahiert, da diese mögliche Tiefensprünge darstellen und Verdeckungskanten eine wichtige Größe in der Videoinhaltsanalyse darstellen. Solche Bildgradienten befinden sich im gezeigten Beispiel bspw. im Teilbereich 221 mit den Kanten der Tischplatte. Homogene Flächen im Bild, bspw. die Fläche der Tischplatte, können auch durch eine Nachverarbeitung gefüllt werden, wodurch der gesamte Prozess der Erstellung einer Tiefenkarte beschleunigt wird.

Ebenso kann anhand von Tracking-Ergebnissen festgestellt werden, wo sich Objekte, also bspw. Personen, in der Szene bewegen. Im gezeigten Beispiel könnte auf diese Weise bspw. auch der gezeigte, Bereich 210 ausgewählt werden, da sich Personen bspw. vor den genannten Objekten bewegen werden.

Diese Information kann genutzt werden um an diesen Stellen die Tiefe von Grundebenen, d.h. Ebenen, auf denen sich Objekte bzw. Personen befinden bzw. bewegen, zu schätzen. Anschließend kann mit den gewonnenen Werten eine Grundebene geschätzt werden, welche wiederum dem Tracking als Input dienen kann.

Das Schwenken der Kamera bewegt die Bildpunkte eines erfassten Bildes auf Kreisbahnen, wobei der Radius von dem Kippwinkel der Kamera abhängt. Je größer ein Anteil der Kreisbahn ist, der im Bild sichtbar ist, desto mehr Aufnahmen sollten von diesem Kippwinkel gemacht werden, um den Gesamtausschnitt zu füllen, da die Kamera nur um zwei Achsen rotiert werden kann.

Ein vereinfachter Fall ist bspw. für einen geringen Kippwinkel möglich. In diesem Fall sind die Kreisbahnen annähernd Geraden und der Winkel des sichtbaren Ausschnitts entspricht in etwa dem horizontalen Öffnungswinkel der Kamera. Dann kann eine feste Unterteilung des Bildes in horizontale und vertikale Bereiche anhand des Zoom-Faktors und des Öffnungswinkels erfolgen.

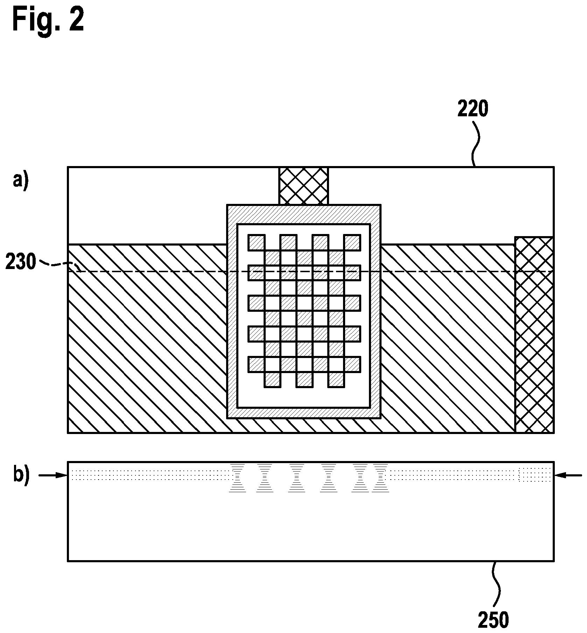

In Figur 2a ist schematisch der Teilbereich 220 des Erfassungsbereichs 200 aus Figur 1 detaillierter dargestellt. Beispielhaft ist darin eine Tafel mit Schachbrettmuster zu sehen.

In Figur 2b ist nun schematisch ein Gradienten-Stapel-Bild 250 für verschiedene Fokuseinstellungen (auf der y-Achse) der Kamera 100 entlang einer Line 230 in dem Teilbereich 220 aus Figur 2a gezeigt. Das Gradienten-Stapel-Bild wird erzeugt aus einer Vielzahl von Bildern, die von dem Teilbereich 220 mittels der Kamera 100 bei jeweils verschiedener Fokuseinstellung der Kamera 100 aufgenommen wurden.

Für jedes dieser Bilder können nun die Gradienten berechnet werden, ggf. können dabei Gradienten in einer Nachbarschaft zusammengefasst werden oder es kann über mehrere Bilder akkumuliert werden, um Rauschen zu unterdrücken. Dies ist insbesondere in dunklen Bildbereichen zweckmäßig.

Jeder Fokuseinstellung ist ein y-Wert zugeordnet. Für jede Fokuseinstellung wird entlang der Linie 230 für jeden Bildpunkt der Helligkeitsgradient als Bildgradient bestimmt und z.B. als Farb- oder Grauwert eingezeichnet. Es sei darauf hingewiesen, dass in Figur 2b keine Graustufen abgebildet werden können und daher rein darstellerisch für Grauwerte oberhalb einer Schwelle Schwarz und für Grauwerte unterhalb der Schwelle Weiß gezeigt ist. Die eigentlich helleren längeren Linien der "Sanduhr" sind daher auch schwarz dargestellt.

Wie an dem Bildstapel 250 zu erkennen ist, sind die Gradienten an der links und rechts mittels eines Pfeils gekennzeichneten Linie am größten, d.h. in diesem Bild ist der Gradient maximal. Die diesem Bild entsprechende Fokuseinstellung stellt demnach den Teilbereich 210 möglichst scharf dar und kann zur Ermittlung der Entfernung des Objekts, d.h. hier der Tafel mit dem Schachbrettmuster, von der Kamera herangezogen werden.

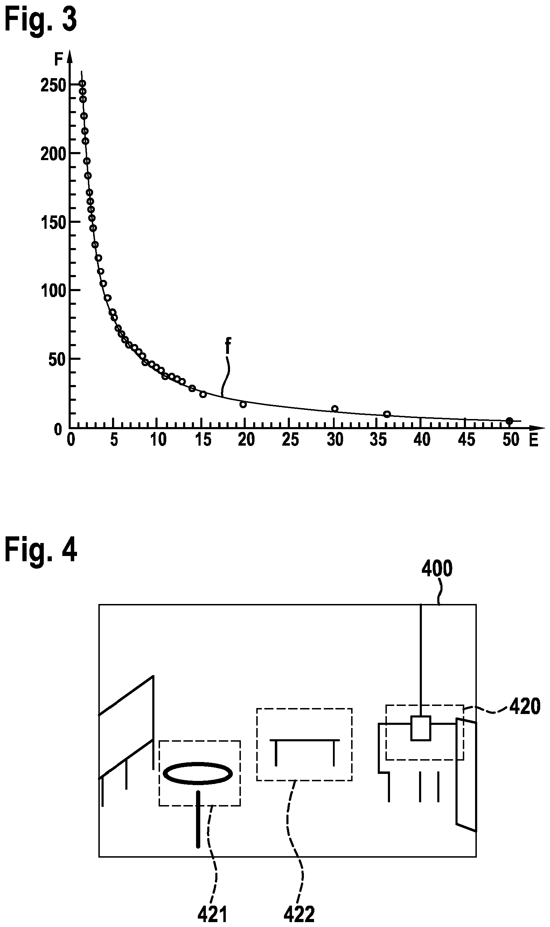

In Figur 3 ist ein Zusammenhang zwischen der Fokuseinstellung F der Kamera und einer Entfernung E eines Objekts von der Kamera in einem Diagramm dargestellt. Die Entfernung E ist in Metern angegeben, die Fokuseinstellung F in einer beliebigen Einheit.

Die einzelnen Messpunkte in dem Diagramm (hier als Kreise dargestellt) können nun bspw. im Rahmen von Testaufnahmen ermittelt werden. Hierzu kann bspw. ein Objekt in verschiedenen Abständen von der Kamera bzw. deren Objektiv positioniert werden und mit der Kamera kann jeweils diejenige Fokuseinstellung gewählt werden, mit welcher das Objekt möglichst scharf abgebildet wird.

Diese einzelnen Messpunkte können anschließend bspw. mit einer Funktion f gefittet werden. Auf diese Weise lässt sich sehr einfach anhand eines gemäß der Figuren 2a und 2b erläuterten Verfahrens einem Objekt eine Entfernung zuordnen. Ein solches Verfahren wird auch, wie bereits erwähnt, als "Depth from Focus" bezeichnet.

Auf diese Weise kann also dem in dem Teilbereich 220 dargestellten Ausschnitt eine Tiefe zugeordnet werden. Auf die gleiche Weise kann auch den übrigen, gezeigten Teilbereichen 221 und 222 eine Tiefe zugeordnet werden.

In Figur 4 ist nun schematisch eine Tiefenkarte 400 für den Erfassungsbereich 200 aus Figur 1 dargestellt. Hierbei entspricht das Tiefenbild 420 dem Teilbereich 220, das Tiefenbild 421 dem Teilbereich 221 und das Tiefenbild 422 dem Teilbereich 222.

Im hier gezeigten Fall sind Objekte geringerer Entfernung mit dickeren Linien und Objekte mit größerer Entfernung mit dünneren Linien dargestellt. In einem Graustufenbild könnten bspw. Objekte geringerer Entfernung heller und Objekte mit größerer Entfernung dunkler dargestellt sein.

Wie in Figur 4 zu sehen, ist es bspw. ausreichend, nur die Tiefen von Kanten von Objekten mittels Variation der Fokuseinstellungen zu ermitteln. Homogene Flächen, also bspw. die Platte des Stehtischs im Teilbereich 221 bzw. im Tiefenbild 421 können bspw. durch Interpolation der Tiefe der diese Fläche begrenzenden Kanten ermittelt werden.

Flächen senkrecht zur Kameranormalen haben die gleiche Tiefe entlang von Kreisbahnen, weshalb es zweckmäßig ist, Werte für die Tiefe entlang von Kreisbahnen zu propagieren. Auch auf diese Weise kann die Tiefe für bestimmte Flächen oder Bereiche ermittelt werden.

Das Zusammensetzen einzelner Teilbereiche bzw. Tiefenbilder sollte dabei sichergestellt werden, um eine Tiefenkarte der gesamten Szene bzw. des ausgewählten Bereichs der Szene extrahieren zu können. Es versteht sich, dass hierzu nicht nur die drei gezeigten Teilbereiche verwendet werden können, sondern so viele Teilbereiche, dass der gesamte ausgewählte Bereich der Szene abgedeckt ist. Wie bereits erwähnt, kann es dabei zweckmäßig sein, dass nebeneinander liegende Teilbereiche überlappen.

Eine Berechnung eines konkreten Ausschnitts der Tiefenkarte kann durch perspektivische Projektion aller sichtbaren Aufnahmen im Raum auf die neue Bildebene des Ausschnitts erfolgen, ähnlich wie dies bspw. bei einem Rendern einer Computergrafik erfolgt.

Dabei ist auch ein erneutes Messen potentiell fehlerhafter Bereiche in der Tiefenkarte denkbar. Es ist auch denkbar, dass die Szene von Zeit zu Zeit validiert wird, um zu prüfen, ob sich die 3D-Struktur verändert hat.

Eine bestehende Funktionalität des VCA-Systems kann nun mit dem vorgeschlagenen Verfahren verbessert werden, bspw. kann eine sog. Funktion "Idle Object Detection" plausibilisiert werden. Hierbei würde eine PTZ-Kamera die Stelle des relevanten Objekts ansteuern und versuchen, Tiefenunterschiede in diesem Bereich zu erkennen und somit zu plausibilisieren, ob es sich um ein Objekt handelt oder ob ggf. ein Schatten zu sehen ist, der bspw. einen Falschalarm ausgelöst hat.

Dichte Tiefenkarten können bspw. dadurch erreicht werden, dass Regionen unbekannter Tiefe, die bspw. ein Resultat eines niedrigen Signal-Rausch-Verhältnisses in dieser Region sind und für die das "Depth from Focus"-Verfahrens gescheitert ist, durch eine Nachverarbeitung gefüllt werden.

## Patentansprüche

1. Verfahren zur Erstellung und Verwendung einer Tiefenkarte (400) wenigstens eines ausgewählten Bereichs (210) eines Erfassungsbereichs (200) einer ortsfesten Kamera (100), wobei als Kamera (100) eine PTZ-Kamera verwendet wird,
wobei mittels der Kamera (100) mehrere, voneinander verschiedene Teilbereiche (220, 221, 222) des wenigstens einen ausgewählten Bereichs (210) angesteuert werden,
wobei für jeden der Teilbereiche (220, 221, 222) mittels Variation einer Fokuseinstellung (F) der Kamera (100) eine Tiefeninformation aus dem jeweiligen Teilbereich (220, 221, 222) ermittelt wird,
wobei unter Berücksichtigung der Tiefeninformationen der Teilbereiche (220, 221, 222) die Tiefenkarte (400) erstellt wird, und
wobei die Tiefenkarte (400) zur Verbesserung und/oder Überprüfung einer Videoinhaltsanalyse für den wenigstens einen ausgewählten Bereich (210) verwendet wird,
wobei die anzusteuernden Teilbereiche (220,221, 222) unter Berücksichtigung von Bildgradienten in einem dem wenigstens einen ausgewählten Bereich (210) entsprechenden Bild ausgewählt werden.

2. Verfahren nach Anspruch 1, wobei die anzusteuernden Teilbereiche (220, 221, 222) unter Berücksichtigung einer Objektverfolgung in dem wenigstens einen ausgewählten Bereich (210) ausgewählt werden.

3. Verfahren nach einem der vorstehenden Ansprüche, wobei die anzusteuernden Teilbereiche (220, 221, 222) derart ausgewählt werden, dass benachbarte Teilbereiche wenigstens teilweise überlappen.

4. Verfahren nach einem der vorstehenden Ansprüche, wobei bei der Erstellung der Tiefenkarte (400) einzelne, den Teilbereichen (220, 221, 222) entsprechende Tiefenbilder (420, 421, 422) zusammengesetzt werden, und wobei Tiefeninformationen für Bereiche des wenigstens einen auswählten Bereichs (210), für die mittels der Kamera (100) keine Tiefeninformation ermittelt wurden, wenigstens teilweise unter Berücksichtigung der Tiefeninformationen der Teilbereiche (220, 221, 222) abgeschätzt werden.

5. Verfahren nach einem der vorstehenden Ansprüche, wobei mittels Variation der Fokuseinstellung (F) der Kamera (100) die Tiefeninformation aus dem jeweiligen Teilbereich (220, 221, 222) ermittelt wird, indem Bilder für verschiedene Fokusstufen (F) aufgenommen werden, und aus Bildgradienten der einzelnen Bilder eine dem maximalen Bildgradienten entsprechende Fokuseinstellung ermittelt wird.

6. Verfahren nach einem der vorstehenden Ansprüche, wobei die mehreren, voneinander verschiedenen Teilbereiche (220, 221, 222) mittels der Kamera (100) durch Schwenken (110) und/oder Kippen (120) und/oder Zoomen (130) der Kamera (100) angesteuert werden.

7. Ortsfeste PTZ-Kamera (100), die dazu eingerichtet ist, ein Verfahren nach einem der vorstehenden Ansprüche durchzuführen.

8. Computerprogramm, das eine ortsfeste PTZ-Kamera (100) dazu veranlasst, ein Verfahren nach einem der Ansprüche 1 bis 6 durchzuführen, wenn es auf der ortsfesten PTZ-Kamera (100) ausgeführt wird.

9. Maschinenlesbares Speichermedium mit einem darauf gespeicherten Computerprogramm nach Anspruch 8.

## Claims

1. Method for generating and using a depth map (400) of at least one selected region (210) of a capturing region (200) of a spatially fixed camera (100), wherein the camera (100) used is a PTZ camera,
wherein the camera (100) is aimed at a plurality of mutually different partial regions (220, 221, 222) of the at least one selected region (210),
wherein for each of the partial regions (220, 221, 222) a depth information item is ascertained from the respective partial region (220, 221, 222) by varying a focus setting (F) of the camera (100),
wherein the depth map (400) is generated taking into account the depth information of the partial regions (220, 221, 222), and
wherein the depth map (400) is used to improve and/or check a video content analysis for the at least one selected region (210),
wherein the partial regions (220, 221, 222) on which the aim is directed are selected taking into account image gradients in an image which corresponds to the at least one selected region (210).

2. Method according to Claim 1, wherein the partial regions (220, 221, 222) on which the aim is to be directed are selected taking into account object tracking in the at least one selected region (210).

3. Method according to either of the preceding claims, wherein the partial regions (220, 221, 222) on which the aim is to be directed are selected such that neighbouring partial regions at least partially overlap.

4. Method according to one of the preceding claims, wherein, during the generation of the depth map (400), individual depth images (420, 421, 422) which correspond to the partial regions (220, 221, 222) are stitched together, and wherein depth information for regions of the at least one selected region (210) for which no depth information has been ascertained using the camera (100) is estimated at least partially taking into account the depth information of the partial regions (220, 221, 222).

5. Method according to one of the preceding claims, wherein the depth information is ascertained from the respective partial region (220, 221, 222) using variation of the focus setting (F) of the camera (100) by recording images for various focal stages (F), and a focus setting corresponding to the maximum image gradient is ascertained from image gradients of the individual images.

6. Method according to one of the preceding claims, wherein the camera (100) is aimed at the plurality of mutually different partial regions (220, 221, 222) by way of panning (110) and/or tilting (120) and/or zooming (130) of the camera (100).

7. Spatially fixed PTZ camera (100), which is configured to perform a method according to one of the preceding claims.

8. Computer program, which causes a spatially fixed PTZ camera (100) to perform a method according to one of Claims 1 to 6 when it is executed on the spatially fixed PTZ camera (100).

9. Machine-readable storage medium having a computer program according to Claim 8 stored thereon.

## Revendications

1. Procédé d'établissement et d'utilisation d'une carte de profondeur (400) d'au moins une zone sélectionnée (210) d'une zone de détection (200) d'une caméra fixe (100), une caméra PTZ étant utilisée comme caméra (100),
une pluralité de sous-zones différentes (220, 221, 222) de l'au moins une zone sélectionnée (210) étant commandée à l'aide de la caméra (100),
pour chacune des sous-zones (220, 221, 222), une information de profondeur étant déterminée à partir de la sous-zone respective (220, 221, 222) par variation d'un réglage de focalisation (F) de la caméra (100),
la carte de profondeur (400) étant établie en prenant en compte des informations de profondeur des sous-zones (220, 221, 222), et
la carte de profondeur (400) étant utilisée pour améliorer et/ou contrôler une analyse de contenu vidéo pour l'au moins une zone sélectionnée (210),
les sous-zones (220, 221, 222) à commander étant sélectionnées en prenant en compte de gradients d'image dans une image correspondant à l'au moins une zone sélectionnée (210).

2. Procédé selon la revendication 1, les sous-zones (220, 221, 222) à commander étant sélectionnées en prenant en compte d'un suivi d'objet dans l'au moins une zone sélectionnée (210).

3. Procédé selon l'une des revendications précédentes, les sous-régions (220, 221, 222) à commander étant sélectionnées de telle sorte que les sous-zones adjacentes se chevauchent au moins partiellement.

4. Procédé selon l'une des revendications précédentes, lors de l'établissement de la carte de profondeur (400), des images de profondeur individuelles (420, 421, 422) qui correspondent aux zones partielles (220, 221, 222) étant combinées, et les informations de profondeur pour des zones de l'au moins une zone sélectionnée (210) pour lesquelles aucune information de profondeur n'a été déterminée au moyen de la caméra (100), étant estimées au moins partiellement en prenant en compte des informations de profondeur des sous-zones (220, 221, 222).

5. Procédé selon l'une des revendications précédentes, les informations de profondeur étant déterminées à partir de la sous-zone respective (220, 221, 222) par variation du réglage de focalisation (F) de la caméra (100) en capturant des images pour différents niveaux de focalisation (F) et un réglage de focalisation, qui correspond au gradient d'image maximum, étant déterminé à partir des gradients d'image des images individuelles.

6. Procédé selon l'une des revendications précédentes, la pluralité de sous-zones (220, 221, 222) différentes les unes des autres étant commandée au moyen de la caméra (100) par pivotement (110) et/ou inclinaison (120) et/ou par zoom (130) de la caméra (100) .

7. Caméra PTZ fixe (100) qui est conçue pour mettre en œuvre un procédé selon l'une des revendications précédentes.

8. Logiciel qui ordonne à une caméra PTZ fixe (100) de mettre en œuvre un procédé selon l'une des revendications 1 à 6 lorsqu'il est réalisé sur la caméra PTZ fixe (100).

9. Support de mémorisation lisible par machine comprenant un logiciel selon la revendication 8 mémorisé sur celui-ci.
